# EUROPEAN PATENT SPECIFICATION

(11) **EP 0 865 340 B1**
(45) Date of publication and mention of the grant of the patent: **26.09.2001**
(21) Application number: 96935612.0
(22) Date of filing: 25.10.1996
(51) Int. Cl.: B23K 31/02, B23K 37/00

(54) **METHOD FOR ATTACHING A FIRST ELEMENT OF A FIRST MATERIAL TO A SECOND ELEMENT OF A SECOND MATERIAL BY A WELDING PROCESS**
VERFAHREN ZUM SCHWEISSVERBINDEN VON ZWEI ELEMENTEN
PROCEDE POUR FIXER UN PREMIER ELEMENT EN UN PREMIER MATERIAU A UN SECOND ELEMENT EN UN SECOND MATERIAU, PAR UN PROCEDE DE SOUDAGE

(30) Priority: 26.10.1995 NO 954277
(43) Date of publication of application: 23.09.1998
(73) Proprietor: NORSK HYDRO ASA, 0240 Oslo (NO)
(72) Inventor: BERGER, Lage, Rehn, N-2830 Raufoss (NO); BERGET, Trygve, N-2830 Raufoss (NO)
(74) Representative: Patentanwälte Leinweber & Zimmermann
(86) International application number: NO9600253
(87) International publication number: WO9715418

(56) References cited:
- US-A- 3 774 009
- US-A- 4 119 827
- US-A- 4 752 026

## Description

### Background of the invention

The present application relates to the a method for attaching a first element of a first material to a second element of a second material by a welding process, said first element being connected to a third element of said second material, which third element is brought in contact with said second element, whereafter said third element is welded to said second element through a throughgoing hole in said first element.

### Prior art

From DK patent publication 29716 there is known a connection of weldable metal objects with non-weldable or hardly weldable objects, it being suggested that on the hardly weldable objects there will be mechanically attached elements of arbitrary shape, for example rings, plugs, lists or similar of easily weldable metal to which the weldable metal object can be welded.

From SE-B-309 352 there is known a welding technique for welding a lining in a container, there being used sleeveshaped connection elements, also known from SE-B-309 526.

DE-A1-20 10 785 discloses welding of different metals, especially steel which has been covered by titanium or zirconium.

US 2 985 747 relates to a method for attaching a titanium object to an iron containing metal main body, said iron containing metal main body having inserted thereinto an inlayt of vanadium, whereafter a hole is made in said titanium object for welding said titanium object through said hole to said vanadium inlay.

In connection with structures wherein a material which cannot be welded to steel, is to be spot welded or welded to a steel structure, said prior art solutions are to the fact of attaching a steel plate to the product which is to be welded, either by screws or rivets, and thereafter via a throughgoing hole in the product to effect said welding.

The disadvantages in connection with such solutions are to the fact that the weight will be too high, there will partly be induced large extra costs in connection with the required attachment elements and the mounting will further add to the costs thereof.

### Summary of the invention

Thus, the invention relates to the design and mounting of a body which is weldable to a main structure, for example of steel, and which is the carrier element for a third material which cannot be welded to steel.

An object of the present invention is to provide a welding method wherein the element is of low weight, said element being easy to mount in automatic equipement, and said element being able to withstand loads prior to the welding, i.e. the pressing out force being sufficiently high.

This is solved in connection with a method as stated in the preamble, which according to the invention is characterized in that said third element is shaped substantially as a cup-shaped means having an extending collar at its open end, said means being arranged with a tight fit in said hole, and whereafter the bottom of said substantially cup-shaped means is welded to said second element.

Further features and advantages provided by the present invention will appear from the following detailed description of embodiments, as well as from the attached patent claims.

### Brief disclosure of the drawings

Figures 1A and 1B illustrate a top view and a side view, respectively, of a substantially cup-shaped means having a collar extending from its open end.

Figures 2A and 2B illustrate a plan view and a side view, respectively, of a first element of a first material provided with a throughgoing hole.

Figures 3A and 3B illustrate a plan view and a side view, respectively, of a second element of a second material which is to be welded to said first element.

Fig. 4 is a side view illustrating the substantially cup-shaped means arranged in the hole of said first element.

Fig. 5 is a side view illustrating said second element being placed in close proximity of said first element and in close proximity to the bottom of said substantially cup-shaped means arranged in the hole thereof.

Fig. 6 is a side view similarly to Fig. 5, and illustrates said first element, the substantially cup-shaped means arranged therein, as well as said second element welded to the bottom of said substantially cup-shaped means.

Figures 7A and 7B illustrate perspective views of a second embodiment of a substantially cup-shaped means and an associated first element, respectively, especially adapted for taking large torque moments.

Fig. 8 is a perspective view illustrating the substantially cup-shaped means of Fig. 7A assembled in the first element of Fig. 7B.

Fig. 9 is a longitudinal section taken along the lines IX-IX of Fig. 8.

Fig. 10 is a perspective view illustrating still another embodiment of a substantially cup-shaped means having a specific collar shape, mounted in a hole in a first element.

Fig. 11 is a longitudinal section through still another embodiment of a cup-shaped means being adapted to a first element having varying plate thickness or being composed of several elements of various dimensions.

Fig. 12 is a longitudinal section through yet another embodiment of a substantially cup-shaped means having a specific bottom portion contributing in a favourable holding effect when being arranged in an associated first element.

Figures 13A and 13B illustrate a top view and a longitudinal section taken along the lines XIIIB-XIIIB in Fig. 13A, respectively, of still another embodiment of a substantially cup-shaped means, here being designed as a double means having a specific intermediate portion therebetween.

Fig. 14A is a perspective view of another embodiment of a substantially cup-shaped means according to the present invention.

Fig. 14B is a longitudinal section through an embodiment of a substantially cup-shaped means as illustrated in Fig. 14A, arranged in an associated first element and being provided with a unique collar for further attachment to said first element.

Fig. 15A is another embodiment of a substantially cup-shaped means according to the present invention, provided with still another unique collar.

Fig. 15B is a longitudinal section through the embodiment of the means illustrated in Fig. 15A arranged in a throughgoing hole in an associated first element, said unique collar being arranged for further attachment to said first element or possibly to an intermediate element in further association therewith.

### Detailed description of embodiments

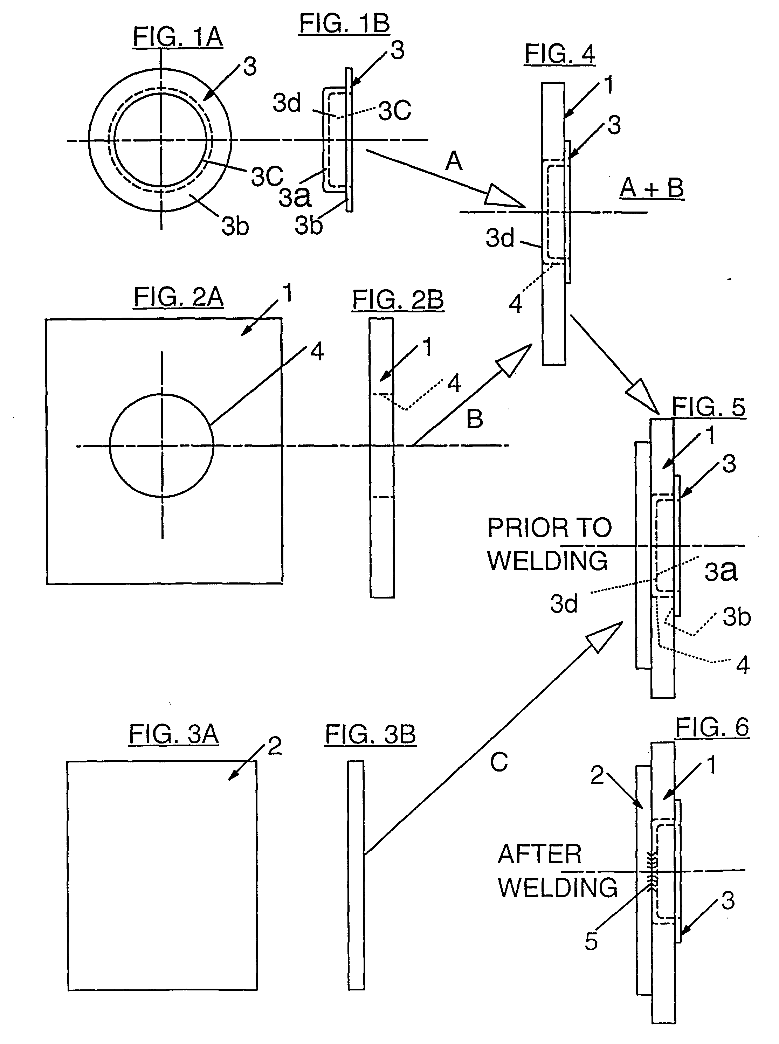

In Figures 1-6 there are illustrated the various parts which can be included in an embodiment of a method according to the present invention, namely a method for attaching a first element 1 of a first material, see Figures 2A and 2B, to a second element 2 of a second material, see Figures 3A and 3B, by a welding process, the materials of said two elements 1 and 2, respectively, being substantially non-weldable to each other.

In Figures 1A and 1B there is illustrated a top view and a side view of a third element 3 which is of the same material as said second element 2, which third element 3 is shaped substantially as a cup-shaped means 3a having an extending collar 3b at its open end 3c. This third element 3, see arrows A and B, will be placed with a tight fit in a hole 4, made in said first element 1, see Fig. 4, wherein said first element 1 and said third element 3 have been mounted together.

The second element 2, see arrow C, can thereafter be is brought in position against an opposit surface of said first element 1, i.e. said second element 2 is brought in contact with said first element 1 and in contact with the bottom 3d of said third element 3, see Fig. 5, which illustrate an assembly just prior to the commencement of the welding process.

After said first element 1 with its substantially cupSHAPED means 3a with an extending collar 3b located in the hole 4 thereof, has been brought in contact with said second element 2, the bottom 3d of said cup-shaped means 3a will be welded with a welding connection 5 to said second element 2, see Fig. 6.

It is to be understood that said first element 1 and said second element 2 cannot be welded to each other, said first element being of a material which for example cannot be welded to steel, whereas element 2 and said cup-shaped means 3 can be made of for example steel.

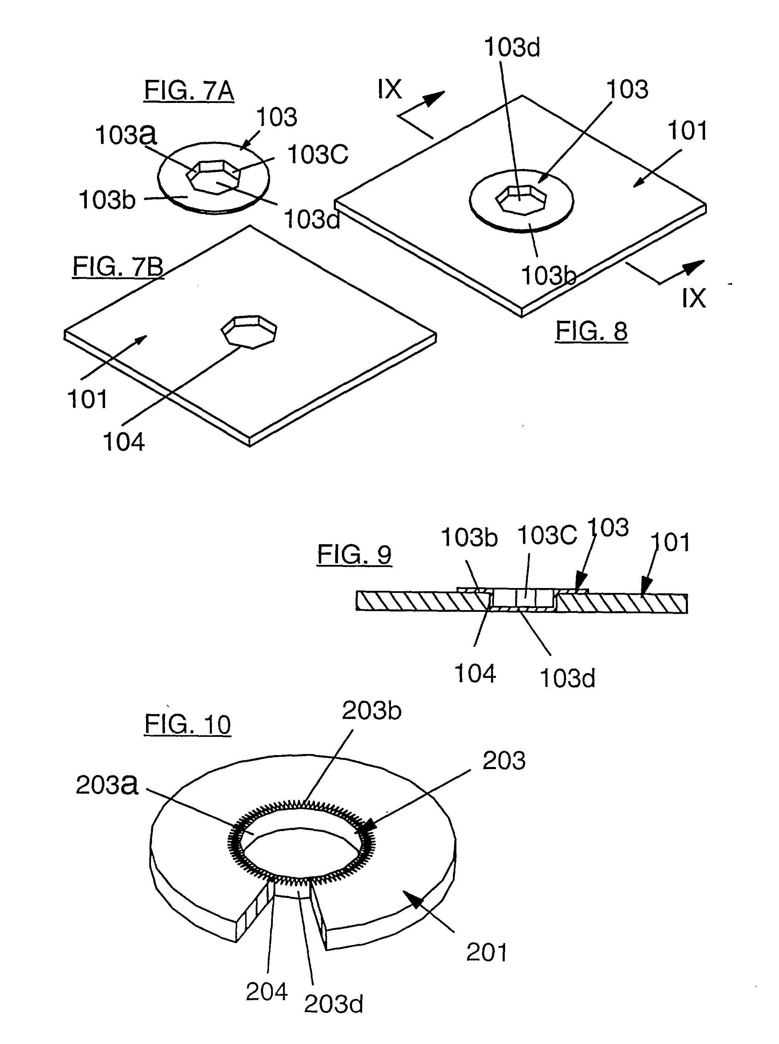

In Fig. 7A there is illustrated in a perspective view another embodiment of a substantially cup-shaped third element 103, which third element 103 also here takes the form of a substantially cup-shaped means 103a having an upper extending collar 103b surrounding a multi-edged open end 103c and a corresponding bottom 103d.

In Fig. 7B there is illustrated perspectively a further embodiment of a first element 101 of a first material being provided with a throughgoing hole 104 having a plurality of straight edges, adapted to letting the substantially cup-shaped means 103c of Fig. 7A be located therein with a snug fit, as this is further illustrated in Figures 8 and 9.

It should be noted that the multi-edged shape of the third element 103 fitting into the multi-edged hole 104 in said first element 101 will be specifically favourable in connection with the attachment to a second element and wherein the attachement will be subjected to larger torque forces.

In Fig. 10 there is illustrated still another embodiment of a substantially cup-shaped third element 203 having an extending collar 203b made of sharp teeth or prongs which can contribute to a further attachment when sid cup-shaped means 203 is put in position in a throughgoing hole 204 in a second element 201, the location therein still being effected with a snug fit.

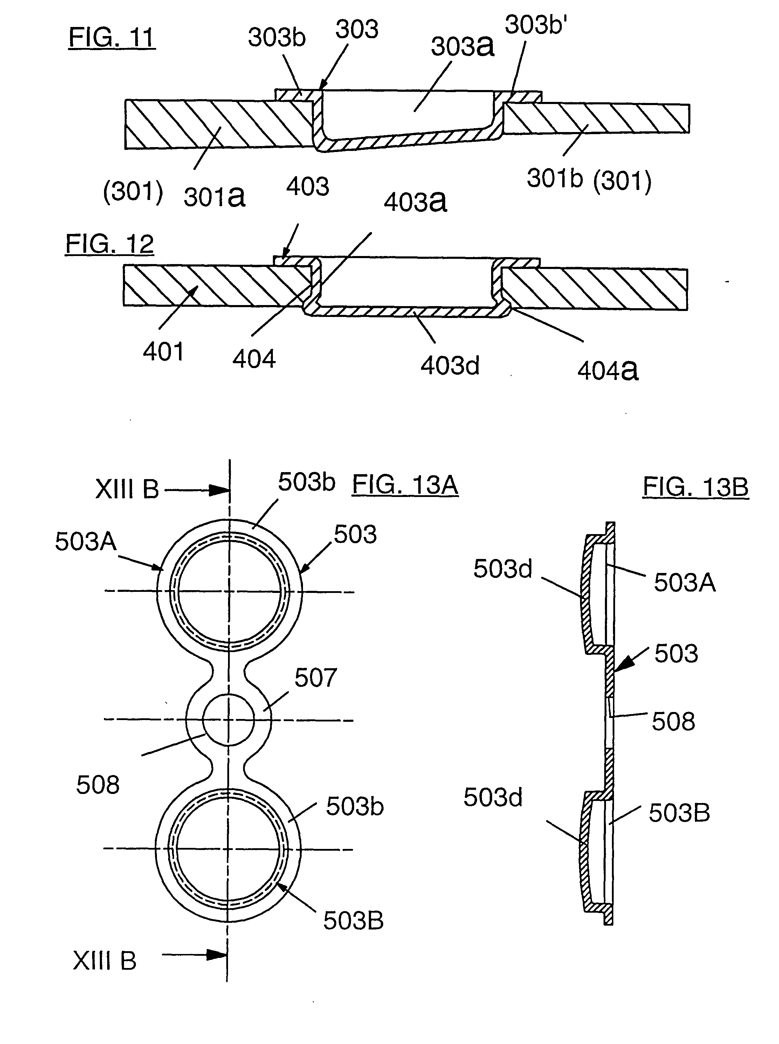

In Fig. 11 there is illustrated a section through yet another embodiment of a substantially cup-shaped element 303, said element having a cup-shaped means 303a provided with a collar of varying dimension, for example a collar portion 303b having a thicker dimension and another collar portion 303b' having a smaller dimension. Said cup-shaped element 303 can for example being adapted to fit into a hole in a first element 301 having various thickness, for example a first thickness 301a and a second thickness 301b, or possibly being adapted to first elements being constituted by two or more pieces.

In Fig. 12 there is illustrated still another embodiment of a third element 403 being positioned in a first element 401, namely in a throughgoing hole 404 made in said first element 401. In this specific embodiment the bottom portion 403d may appropriately be pressed into circumferentially extending recesses 404a of the bottom portion of said hole 404 in said first element 401, for further locking therein prior to the welding to a previously discussed second element (not illustrated).

In Figures 13A and 13B there are illustrated a top view and a section through the lines XIIIB-XIIIB in Fig. 13A, respectively, of yet another embodiment of a third element 503, which still is substantially cup-shaped, but here with an embodiment including pairs of cup-shaped elements 503A and 503B, respectively. Each pair of substantially cup-shaped elements 503A and 503B are tied together by an intermediate part 507 being of substantially the same thickness as the collar portion 503b of each pair of elements 503A and 503B, and being provided with a hole 508 therein. The bottom portion 503d of each cup-shaped element 503A and 503B may be somewhat bulged and/or somewhat flexible, depending on the field of application.

It is to be understood that such pairs of substantially cup-shaped elements can be affixed in corresponding holes in a second element (not illustrated) and with a snug fit. It is further to be understood that such pairs of third elements 503A and 503B could equally well be arranged in appropriate holes through pairs of first elements, such pairs of elements or any other number of elements being held together and being welded to said previously discussed second elements (not illustrated), with or without a further attachment means through said hole 508 in the intermediate portion 507 between said cup-shaped elements 503A and 503B.

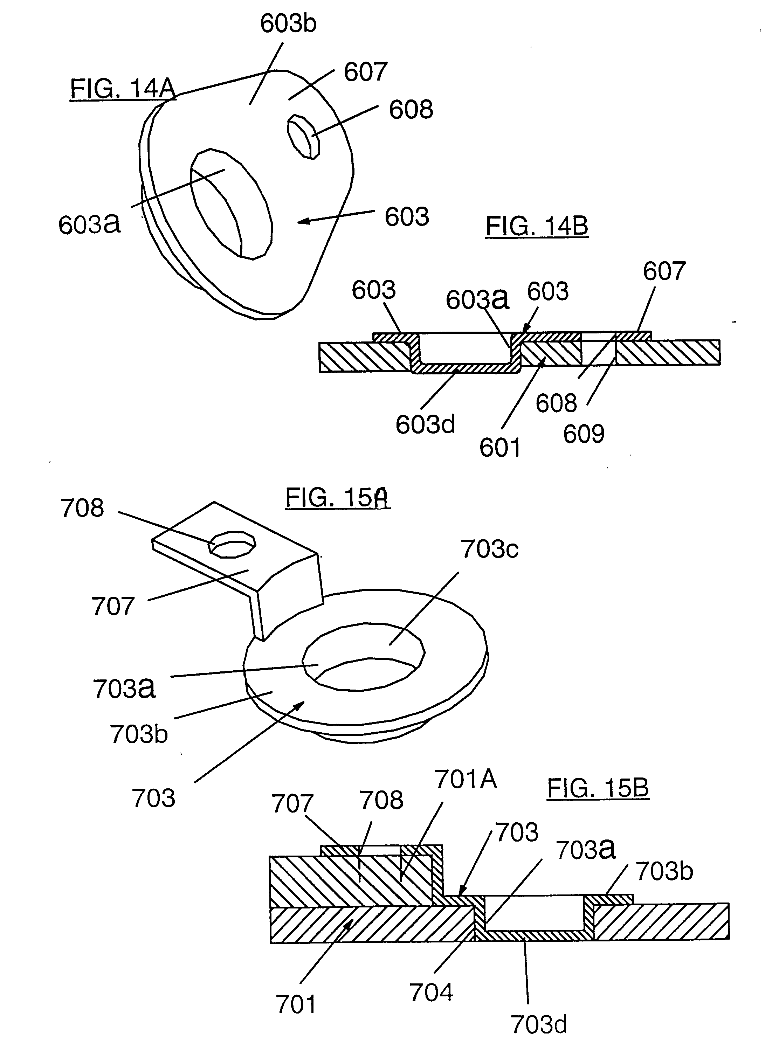

In Fig. 14A there is perspectively illustrated yet another embodiment of a substantially cup-shaped third element 603 including a cup-shaped means 603a surrounded by a collar 603b at its open end, which collar 603b has a further extension 607 with a hole 608 made therein.

In Fig. 14B there is illustrated a longitudinal section through the element 603 being positioned in a first element 601, namely in a hole 604 made therein, and with the extended collar 607 in contact with the upper surface thereof, and the hole 608 therein being arranged in line with a corresponding hole 609 made in said first element 601.

It is to be understood that the cup-shaped means 603a can still be positioned in the larger hole 604 in said first element 601 with a close fit, and in addition said third element 603 can be attached to said first element 601 by further attachment means going through the hole 608 in the extended collar 607 of said third element 603 as well as the hole 609 in said first element 601, for thereby securing said third element in said first element 601 prior to being welded to a second element (not illustrated).

In Fig. 15A there is illustrated another embodiment of a third element 703 comprising a substantially cup-shaped means 703a provided with a collar 703b extending around the upper opening 703c thereof, said collar 703c being provided with a step-shaped extension 707 having a hole 708 therein.

When being mounted in a first element 701, as this appears from Fig. 15B, the substantially cup-shaped means 703a of the third element 703 will be located in a hole 704 in said first element 701 with a close fit, whereas the step-like extension 707 can be attached to an elevated member 701A of said first element 701 or an element independent thereof.

Also here a second element (not illustrated) will be brought in contact with said first element 701 and in contact with the bottom 703b of said third element, substantially in the same manner as illustrated and discussed in connection with Fig. 6, so that the bottom 703d of the cup-shaped means 703a can be welded by a welding connection to said previously discussed second element. It is to be understood that the welding process itself may be of any appropriate type.

## Claims

1. Method for attaching a first element (1) of a first material to a second element of a second material by a welding process, said two materials being substantially not weldable to each other, said first element (1) being connected to a third element (3) of said second material, which third element (3) is brought in contact with said second element (2), whereafter said third element (3) is welded to said second element (2) via a throughgoing hole (4) in said first element (1), the method involving the use of a third element (3) comprising a substantially cup-shaped means (3a) having an extending collar (3b) at its open end (3c), **characterized in that** there is used a cup-shaped means (3a) having a substantially flat bottom (3d) and an outer diameter which allows a close fit in said hole (4) of said first element (1), so as to allow said first element (1) with cup-shaped elements (3a) mounted therein to be brought in close contact with said second element (2) prior to welding, whereafter the bottom (3d) of said substantially cup-shaped means (3a) is welded to said second element (2).

2. Method as claimed in claim 1, **characterized in that** there is used a SECOND element (2) and a third element (3) which can be welded to each other, preferably made of steel, whereas said FIRST element (1) is made of a material which is regarded as non-weldable to steel.

3. Method as claimed in claim 1 or 2, **characterized in that** there is used a FIRST element (1) made of synthetic material, for example plastic, possibly reinforced synthetic material.

4. Method as claimed in any of the preceding claims, **characterized by** using a substantially cup-shaped means (103a) being provided with a multi-edged or polygonal wall portion, and a corresponding multi-edged or polygonal hole (104) in said first element (101).

5. Method as claimed in claim 1 or 2, **characterized by** using a substantially cup-shaped means (203a) having an extending collar portion (203b) comprosing sharp teeth or prongs.

6. Method as claimed in claim 1 or 2, **characterized by** using a substantially cup-shaped means (303a) having a collar portion including varying thickness (303b, 303b') adapted to a first element having varying thickness (301a, 301b) or being composed of several pieces.

7. Method as claimed in claim 1 or 2, **characterized by** using a substantially cup-shaped means (403a) which having been located in the corresponding hole (404) in said first element (401) will have its bottom portion (403d) pressed into recesses (404a) in said hole (404).

8. Method as claimed in claim 1 or 2, **characterized by** using substantially cup-shaped means which are connected in pairs (503A, 503B), said pairs (503A, 503B) being held together by an intermediate portion (507) possibly being provided with a smaller hole (508) therein.

9. Method as claimed in claim 1 or 2, **characterized by** using a substantially cup-shaped means (603a) having an extended portion (607) of said collar (603b), said extended collar (607) being provided with a hole (608) therein, which when said substantially cup-shaped means (603a) has been brought in position in a larger hole (604) in said first element (601), then said smaller hole (608) in said extended collar (607) will register with a corresponding second hole (609) in said first element (601).

10. Method as claimed in claim 1 or 2, **characterized by** using a substantially cup-shaped element (703a) being provided with a collar portion (707) being designed with a step-like raised portion (707) having av hole (708) therein, so as to fit around an elevated portion (701A) of said first element (701) or around an element independent thereof, when said cup-shaped means (703a) has been arranged in the hole (704) of said first element (701).

## Patentansprüche

1. Verfahren zum Befestigen eines ersten Elements (1) aus einem ersten Material an einem zweiten Element aus einem zweiten Material durch einen Schweißvorgang, welche beiden Materialen im wesentlichen nicht miteinander verschweißbar sind, wobei das erste Element (1) mit einem dritten Element (3) aus dem zweiten Material verbunden ist, welches dritte Element (3) mit dem zweiten Element (2) in Kontakt gebracht wird, woraufhin das dritte Element (3) mit dem zweiten Element (2) durch ein Durchgangsloch (4) in dem ersten Element (1) verschweißt wird, wobei das Verfahren die Verwendung eines dritten Elements (3) einschließt, das eine im wesentlichen becherförmige Einrichtung (3a) umfaßt, die einen erweiterten Kragen (3b) an ihrem offenen Ende (3c) hat, **dadurch gekennzeichnet, daß** eine becherförmige Einrichtung (3a) verwendet wird, die einen im wesentlichen flachen Boden (3d) und einen Außendurchmesser hat, der einen sattes Anliegen in dem Loch (4) des ersten Elements (1) ermöglicht, so daß es möglich ist, das erste Element (1) mit darin befestigten becherförmigen Elementen (3a) vor dem Verschweißen in engen Kontakt mit dem zweiten Element zu bringen, woraufhin der Boden (3d) der im wesentlichen becherförmigen Einrichtung (3a) mit dem zweiten Element (2) verschweißt wird.

2. Verfahren nach Anspruch 1,
**dadurch gekennzeichnet, daß** ein zweites Element (2) und ein drittes Element (3) verwendet werden, die miteinander verschweißt werden können, vorzugsweise aus Stahl hergestellt, wohingegen das erste Element (1) aus einem Material hergestellt ist, das als mit Stahl nicht verschweißbar betrachtet wird.

3. Verfahren nach Anspruch 1 oder 2,
**dadurch gekennzeichnet, daß** ein erstes Element (1) verwendet wird, das aus synthetischem Material hergestellt ist, beispielsweise aus Kunststoff, und gegebenenfalls verstärktem synthetischen Material.

4. Verfahren nach einem der vorstehenden Ansprüche, **gekennzeichnet durch** die Verwendung einer im wesentlichen becherförmigen Einrichtung (103a), die mit einem vieleckigen oder polygonalen Wandabschnitt versehen ist, sowie eines korrespondierenden vieleckigen oder polygonalen Loches (104) in dem ersten Element (101).

5. Verfahren nach Anspruch 1 oder 2, **gekennzeichnet durch** die Verwendung einer im wesentlichen becherförmigen Einrichtung (203a), die einen erweiterten Kragenabschnitt (203b) hat, der scharfe Zähne oder Zacken enthält.

6. Verfahren nach Anspruch 1 oder 2, **gekennzeichnet durch** die Verwendung einer im wesentlichen becherförmigen Einrichtung (303a), die einen Kragenabschnitt hat, der eine variierende Dicke (303b, 303b') aufweist, die an ein erstes Element angepaßt ist, das eine variierende Dicke (301a, 301b) hat oder aus mehreren Stücken zusammengesetzt ist,.

7. Verfahren nach Anspruch 1 oder 2, **gekennzeichnet durch** die Verwendung einer im wesentlichen becherförmigen Einrichtung (403a), deren Bodenabschnitt (403d) in Vertiefungen (404a) in dem Loch (404) gepreßt wird, nachdem sie in dem korrespondierenden Loch (404) in dem ersten Element (401) plaziert wurde.

8. Verfahren nach Anspruch 1 oder 2, **gekennzeichnet durch** die Verwendung von im wesentlichen becherförmigen Einrichtungen, die paarweise verbunden sind (503A, 503B), welche Paare (503A, 503B) durch einen Zwischenabschnitt (507) zusammengehalten werden, der gegebenenfalls mit einem kleineren Loch (508) versehen ist.

9. Verfahren nach Anspruch 1 oder 2, **gekennzeichnet durch** die Verwendung einer im wesentlichen becherförmigen Einrichtung (603a), die einen erweiterten Abschnitt (607) des Kragens (603b) hat, welcher erweiterte Kragen (607) mit einem Loch (608) versehen ist, wobei dann, wenn die im wesentlichen becherförmige Einrichtung (603a) in einem größeren Loch (604) in dem ersten Element (601) in Position gebracht wurde, das kleinere Loch (608) in dem erweiterten Kragen (607) mit einem korrespondierenden zweiten Loch (609) in dem ersten Element (601) in Übereinstimmung kommt.

10. Verfahren nach Anspruch 1 oder 2, **gekennzeichnet durch** die Verwendung eines im wesentlichen becherförmigen Elements (703a), das mit einem Kragenabschnitt (707) versehen ist, der mit einem stufenartig erhöhten Abschnitt (707) gestaltet ist, in dem ein Loch (708) vorgesehen ist, so daß es um einen erhöhten Abschnitt (701A) des ersten Elements (701) oder um ein davon unabhängiges Element paßt, wenn die becherförmige Einrichtung (703a) in dem Loch (704) des ersten Elements angeordnet wurde.

## Revendications

1. Procédé pour fixer un premier élément (1) d'un premier matériau à un second élément d'un second matériau par une opération de soudage, lesdits deux matériaux étant sensiblement non soudables l'un à l'autre, ledit premier élément (1) étant relié à un troisième élément (3) dudit second matériau, lequel troisième élément (3) est mis en contact avec ledit second élément (2), après quoi ledit troisième élément (3) est soudé audit second élément (2) à travers un trou débouchant (4) dans ledit premier élément (1), le procédé impliquant l'utilisation d'un troisième élément (3) comprenant des moyens sensiblement en forme de coupe (3a) comportant un collier qui s'étend (3b) au niveau de son extrémité ouverte (3c),
**caractérisé en ce que** des moyens en forme de coupe (3a) présentant un fond sensiblement plat (3d) et un diamètre externe qui permet un assemblage serré dans ledit trou (4) dudit premier élément (1) sont utilisés, de manière à permettre la mise en contact étroit dudit premier élément (1) dans lequel les éléments en forme de coupe (3a) sont montés avec ledit second élément (2) avant le soudage, après quoi le fond (3d) desdits moyens sensiblement en forme de coupe (3a) est soudé audit second élément (2).

2. Procédé selon la revendication 1,
**caractérisé en ce qu'**un second élément (2) et un troisième élément (3) qui peuvent être soudés l'un à l'autre sont utilisés, de préférence réalisés en acier, tandis que ledit premier élément (1) est réalisé en un matériau qui est considéré comme non-soudable à l'acier.

3. Procédé selon la revendication 1 ou 2,
**caractérisé en ce qu'**un premier élément (1) réalisé en un matériau synthétique, par exemple du plastique, peut-être un matériau synthétique renforcé, est utilisé.

4. Procédé selon l'une quelconque des revendications précédentes,
**caractérisé par** l'utilisation de moyens sensiblement en forme de coupe (103a) pourvus d'une partie de paroi à bords multiples ou polygonale et d'un trou à bords multiples ou polygonal correspondant (104) dans ledit premier élément (101).

5. Procédé selon la revendication 1 ou 2,
**caractérisé par** l'utilisation de moyens sensiblement en forme de coupe (203a) comportant une partie de collier qui s'étend (203b) comprenant des dents ou des griffes acérées.

6. Procédé selon la revendication 1 ou 2,
**caractérisé par** l'utilisation de moyens sensiblement en forme de coupe (303A) comportant une partie de collier d'une épaisseur variable (303b, 303b') adaptée à un premier élément d'une épaisseur variable (301a, 301b) ou composé de plusieurs pièces.

7. Procédé selon la revendication 1 ou 2,
**caractérisé par** l'utilisation de moyens sensiblement en forme de coupe (403a) qui, ayant été placés dans le trou correspondant (404) dans ledit premier élément (401), auront leur partie inférieure (403d) pressée dans des évidements (404a) dans ledit trou (404).

8. Procédé selon la revendication 1 ou 2,
**caractérisé par** l'utilisation de moyens sensiblement en forme de coupe qui sont reliés par paires (503A, 503B), lesdites paires (503A, 503B) étant maintenues ensemble par une partie intermédiaire (507) peut-être pourvue d'un trou plus petit (508) à l'intérieur de celle-ci.

9. Procédé selon la revendication 1 ou 2
**caractérisé par** l'utilisation de moyens sensiblement en forme de coupe (603a) comportant une partie étendue (607) dudit collier (603b), ledit collier étendu (607) étant pourvu d'un trou (608) à l'intérieur de celui-ci et, lorsque lesdits moyens sensiblement en forme de coupe (603a) ont été mis en position dans un trou plus grand (604) dans ledit premier élément (601), ledit trou plus petit (608) dans ledit collier étendu (607) s'alignera avec un second trou correspondant (609) dans ledit premier élément (601).

10. Procédé selon la revendication 1 ou 2,
**caractérisé par** l'utilisation d'un élément sensiblement en forme de coupe (703a) pourvu d'une partie de collier (707) conçue avec une partie élevée en forme de gradin (707) comportant un trou (708) à l'intérieur de celle-ci, de manière à s'assembler autour d'une partie élevée (701A) dudit premier élément (701) ou autour d'un élément indépendant de celui-ci, lorsque lesdits moyens en forme de coupe (703a) ont été agencés dans le trou (704) dudit premier élément (701).
